# EUROPÄISCHE PATENTSCHRIFT

(11) **EP 3 222 404 B1**
(45) Veröffentlichungstag und Bekanntmachung des Hinweises auf die Patenterteilung: **11.09.2019**
(21) Anmeldenummer: 16000674.8
(22) Anmeldetag: 21.03.2016
(51) Int. Cl.: B29C 48/88, B29C 48/08, B29C 48/10, B29C 48/885

(54) **VORRICHTUNG UND VERFAHREN ZUR RASCHEN ABKÜHLUNG VON EXTRUDATEN**
DEVICE AND METHOD FOR RAPIDLY COOLING EXTRUDATES
DISPOSITIF ET PROCÉDÉ DE REFROIDISSEMENT RAPIDE D'EXTRUDATS

(43) Veröffentlichungstag der Anmeldung: 27.09.2017
(73) Patentinhaber: Collin Lab & Pilot Solutions GmbH, 83558 Maitenbeth (DE)
(72) Erfinder: KASTNER, Friedrich, 4710 Grieskirchen (AT); GRAJEWSKI, Franz, 83512 Wasserburg (DE); VERSTRATEN, Corne, 83308 Trostberg (DE)
(74) Vertreter: Lindermayer, Ludwig Sebastian

(56) Entgegenhaltungen:
- JP-A- H0 796 558
- JP-A- S5 692 022
- US-A- 3 276 076
- US-A- 3 700 763

## Beschreibung

Die Erfindung betrifft ein Verfahren zur schnellen Kühlung von Extrudaten, insbesondere von teilkristallinen Polymeren.

Um eine hohe Transparenz bei teilkristallinen Werkstoffen, insbesondere Polymerwerkstoffen zu erreichen, muss bei der Herstellung die Ausbildung kristalliner Strukturen weitestgehend unterdrückt werden.

Dies geschieht am effektivsten durch rasches Abkühlen (Schockkühlung) des Extrudates unmittelbar nach dessen Herstellung, also durch Quenchen des Extrudates.

Aus DE 100 48 178 A1 ist ein Verfahren zur Erhöhung der Abkühlgeschwindigkeit dünner thermoplastischer Schläuche nach deren Extrusion bekannt, wonach der Soll-Durchmesser des Schlauches beim Abkühlen in einem Kühlmittel durch Abstützungen entsteht, gegen die sich der Schlauch infolge eines Unterdruckes des Kühlmittels anpreßt, dadurch gekennzeichnet, dass der noch plastische Schlauch in einem Kühlmittelbecken durch einen Führungsring, danach durch eine Führungsbuchse und anschließend durch ein Kühlrohr geführt wird.

Aus DE 199 16 428 A ist eine Einrichtung zum raschen Abkühlen dünner thermoplastischer Schläuche nach deren Extrusion bekannt, wobei der Schlauch vertikal extrudiert wird und der Soll-Durchmesser des Schlauchs beim Abkühlen in einem Kühlmittel durch Abstützungen entsteht, gegen die sich der Schlauch infolge eines Unterdrucks des Kühlmittels anpresst.

US 3 276 076 A offenbart eine Vorrichtung zum Abkühlen von Polymerwerkstoffen, die einen mit einer Kühlflüssigkeit gefüllten Kühltank aufweist, in dem eine feststehende Kalibrierplatte angeordnet ist, welche von innen mit einem Wasserstrom gekühlt wird.

JP S56 92022 A offenbart ebenfalls eine Vorrichtung zum Kühlen von Extrudaten. Allerdings wird hier weder eine direkte Kühlung der Kalibrierplatte durch Kühlkanäle noch eine schwenkbare Anordnung der Kalibrierplatte beschrieben.

Als Quenching bezeichnet man üblicherweise ein Verfahren, bei welchem ein Schlauch senkrecht nach unten extrudiert wird. Dieser wird von innen mit Luft aufgeblasen, so dass er in einem Kühlring an eine gekühlte metallische Wand angelegt wird. Zwischen metallischer Wand und Schlauch wird ein Wasserfilm erzeugt, welcher die Reibung minimiert und eine zusätzliche Kühlwirkung erzeugt.

Bei der Herstellung von Schlauchfolien mit dem Quenching Verfahren besteht der Nachteil, dass für jede Flachlegebreite eine eigene Kalibriervorrichtung erforderlich ist. Der Wechsel des Kalibrierrings erfordert zudem erheblichen Rüstaufwand und damit zusätzliche Kosten.

Für die Herstellung von Flachfolien sind derartige Verfahren und Vorrichtungen nicht bekannt.

Es wäre wünschenswert, Flachfolien in ein Wasserbad nach unten zu extrudieren und bei niedrigen Wassertemperaturen das Extrudat möglichst schnell abzukühlen, um auch für solche Folien möglichst hohe Transparenz zu erreichen.

Bei steigenden Foliendurchsätzen und großen Temperaturdifferenzen zwischen Wassertemperatur und Folientemperatur nimmt die abzuführende Leistung (Wärme) zu.

Wollte man dies in einem einfachen Tank machen, steigt der benötigte Kühlflüssigkeitsaustausch, um im Tank eine zeitlich konstante Kühlflüssigkeitstemperatur zu gewährleisten. Hieraus resultieren zumindest an den Kühlflüssigkeitszulauf- und -ablaufrohren im Tank hohe Strömungsgeschwindigkeiten. Diese führen an der Wasseroberfläche im Tank zu unkontrollierten Wellenbewegungen, die mit steigendem Durchsatz immer stärker werden.

Die frei einlaufende Folie wird hierdurch in unkontrollierte Bewegungen versetzt, was sowohl die Oberflächenqualität als auch die Dickenverteilung und Planlage der Folie negativ beeinflusst. Hinzu kommt, dass die Folie dann dazu neigt, sich unkontrolliert zu falten.

Aufgabe der Erfindung ist es ein Verfahren und eine Vorrichtung zum raschen Abkühlen, also zur Schockkühlung von Flachfolien oder Blasfolien bereitzustellen, wobei die Nachteile des Standes der Technik vermieden werden.

Gegenstand der Erfindung ist daher eine Vorrichtung zum raschen Abkühlen von Extrudaten teilkristalliner Polymerwerkstoffe umfassend einen mit einer Kühlflüssigkeit gefüllten Kühltank, dadurch gekennzeichnet, dass im Kühltank mindestens eine Kalibrierplatte schwenkbar angeordnet und mindestens eine Umlenkvorrichtung zum Transport des abgekühlten Extrudates, situiert sind, wobei die Kalibrierplatte aus einer beschichteten Kühlplatte, in die Kühlkanäle und ein Kanal für den Schleppvolumenstroms eingebracht sind, besteht.

Ein weiterer Gegenstand der Erfindung ist ein Verfahren zum raschen Abkühlen von Flachfolien oder Blasfolien nach deren Extrusion, gekennzeichnet durch folgende Verfahrensschritte:
- Extrudieren des Extrudates in einen mit einer Kühlflüssigkeit gefüllten Kühltank,
- Führen des Extrudates über mindestens eine im Kühltank schwenkbar angeordnete Kalibrierplatte, die aus einer beschichteten Kühlplatte, in die Kühlkanäle und ein Kanal für den Schleppvolumenstrom eingebracht sind, besteht
- Zuführung der Kühlflüssigkeit im Umfang des Schleppvolumenstroms über einen Kanal der Kalibrierplatte,
- Entnehmen der abgekühlten Folie über Umlenkvorrichtungen aus dem Tank,
- Trocknen der Folie.

Die Kalibrierplatte besteht aus einer beschichteten Kühlplatte, in die Kühlkanäle eingebracht sind. Als Werkstoffe für die Kühlplatte kommen metallische Werkstoffe insbesondere Stahl, Messing, Kupfer oder Bronzen und andere wärmeleitfähige Legierungen, Keramiken und dergleichen in Frage. Es können aber auch gesinterte Werkstoffe eingesetzt werden, vorzugsweise aus den zuvor genannten Materialien.

Es kann aber auch eine Kombination aus gesintertem Material und kompaktem Material eingesetzt werden. Dies geschieht in der Weise, dass die Seite der Platte, die den Kontakt zur extrudierten Folie hat, gesintertes Material aufweist. Besonders wird bevorzugt, dass das gesinterte Material so angeordnet ist, dass im Inneren ein Kontakt zwischen Sintermaterial und Kühlflüssigkeit hergestellt wird. Dies hat den Vorteil, dass der benötigte Schleppvolumenstrom gleichmäßig über der gesamten Plattenbreite austritt.

Die Kühlplatte kann auch mit separaten Kanälen ausgestattet sein um verschiedene Temperaturprofile und Rampen, zu gewährleisten.

Die Kühlplatte besitzt somit einen eigenen Kühlkreislauf, der einen Großteil der Wärmeabfuhr aus der extrudierten Folie bewirkt. Dadurch wird der nötige Wasseraustausch im Kühltank drastisch minimiert, wodurch die Strömungsgeschwindigkeiten der Kühlflüssigkeit reduziert werden. Dadurch wird eine im Wesentlichen ruhende Wasseroberfläche gewährleistet.

Ferner kann die Kühlplatte auf der Gegenseite zum Folienlauf Kühlrippen aufweisen, die eine zusätzliche Rückkühlung der sich im Tank befindenden Kühlflüssigkeit bewirken.

Als Kühlflüssigkeit kommen insbesondere Wasser oder andere Wärmeträger wie Öle, polare oder unpolare Lösungsmittel, Emulsionen, Dispersionen in Frage. Gegebenenfalls kann die Kühlflüssigkeit auch Additive enthalten, die bestimmte Oberflächeneigenschaften, wie Haftung, Bedruckbarkeit, Lackierbarkeit, Benetzung, Farbe der Folie beeinflussen können.

Die Kühlplatte weist zusätzlich einen eigenen Kanal für den Schleppvolumenstrom zwischen Folie und Platte auf. Hierdurch kann man den Schleppvolumenstrom durch geeignete Stellmittel der jeweiligen Foliengeschwindigkeit anpassen. Außerdem kann hierdurch der von der Folie aus dem Bad mitgenommene Schleppvolumenstrom ersetzt werden.

Der Schleppvolumenstrom minimiert die Reibung zwischen Folie und Platte und erzeugt zudem eine zusätzliche Erhöhung des Wärmeüberganges zwischen Platte und Folie.

Die Beschichtung der Kühlplatte besteht vorzugsweise aus einem Kunststoff, PVD-, CVD-, DLC-Beschichtungen, flammgespritzten Oberflächen, galvanisch aufgebrachten Schichten, wie Chrom, Nickel, etc. In diesen Schichten können noch andere Materialien eingelagert sein wie z. B. Kunststoffe, wie Teflon. Die metallische Oberfläche kann strukturiert sein, beispielsweise aufgeraut sein oder strukturbildende Chrom- oder Keramikschichten aufweisen.

In einer alternativen Ausführungsform kann die Beschichtung durch eine poröse wasserdurchlässige Schicht ersetzt werden, die eine Verbindung zu den Kühlkanälen hat.

In Abhängigkeit von der Porosität und dem Wasserdruck in den Kühlkanälen kann der zwischen der extrudierten zu kühlenden Polymerfolie und der Kühlplattenoberfläche entstehende Kühlflüssigkeitsfilm immer wieder mit kalter Kühlflüssigkeit gespeist werden. Die poröse Schicht besteht beispielsweise aus gesinterten Materialien, Stahl, Kupfer, Legierungen, Keramiken und dergleichen.

Die poröse Schicht kann aber auch Strukturen, die durch Ätzverfahren, Lasern, Elektronenstrahlen oder mechanische Perforation erzeugt werden, aufweisen. Die Perforierung kann dabei auch spezielle Muster und Strukturen aufweisen.

In einer weiteren Ausführungsform kann über die Kühlplatte ein endloses Stahlband geführt werden, das die extrudierte und zu kühlende Folie transportiert.

Gegebenenfalls kann die Abkühlung auch in mehreren ähnlich ausgeführten Kühlbädern erfolgen.

Nach der Entnahme aus dem Kühltank wird die Folie durch ein oder mehrere Blasdüsen und/oder Abquetschwalzenpaare getrocknet.

In den Figuren 1 bis 4 sind erfindungsgemäße Ausführungsformen der Vorrichtung bzw. des Verfahrens dargestellt.

In Figur 1 ist eine erfindungsgemäße Ausführung einer Kalibrierplatte dargestellt.

Darin bedeuten
1 die Kühlplatte
2 die Kühlkanäle,
3 den Kanal für die Zufuhr des Schleppvolumenstroms,
4 die Kühlrippen und
5 die Beschichtung der Kühlplatte.

In Figur 2 ist ein Verfahren und die Vorrichtung zur Kühlung von extrudierten Folien dargestellt.

Die erfindungsgemäße Kalibrierplatte K ist dabei in einem Kühltank 6 montiert. Die Kalibrierplatte K ist schwenkbar angeordnet und kann einen einstellbaren Winkel zwischen 0° und 90° einnehmen. Für ein leichtes Einfädeln der Folie muss diese in eine horizontale Position oberhalb der Wasseroberfläche einnehmen können.

Ferner ist im Kühltank 6 mindestens eine Umlenkrolle 7 zum Transport der Folie 8 aus dem Kühltank 7 vorgesehen. Eine weitere Umlenkrolle 7 ist außerhalb des Kühltanks vorgesehen.

Der Kühltank weist am Boden einen Wasserzulauf 9 auf, sowie einen seitlichen Wasserablauf 10, über den die Regulierung 11 des Abstandes des Wasserspiegels 12 zum Düsenaustritt erfolgt.

Ferner ist am Boden des Kühltanks 6 ein Prallblech 13 situiert. Dieses hat die Aufgabe, das aus dem Wasserzufluss strömende Wasser über den gesamten Bodenbereich des Tanks zu verteilen. Hierdurch wird die Erzeugung von Wellen an der Oberfläche unterdrückt.

Zur Herstellung der Folie 8 wird das Extrudat 14 aus dem Extruder über eine Breitschlitzdüse 15 in den Kühltank extrudiert. Das Extrudat trifft auf der Kalibrierplatte K im Kontaktbereich B auf und wird in dieser Beispiel durch die Kühlflüssigkeit Wasser rasch abgekühlt.

Die Temperatur des Wassers liegt dabei vorzugsweise zwischen 2°C und 99°C.° Bei andern Kühlmedien anstelle von Wasser kann sich dieser Temperaturbereich entsprechend der Gefriertemperatur und der Dampftemperatur des Kühlmittels verschieben.

Die abgekühlte Folie 8 wird anschließend über die Umlenkrollen 7 aus dem Kühltank 6 transportiert und anschließend der Trocknung zugeführt.

Während des Kühlprozesses wird ein Schleppvolumenstrom durch den Kanal 3 der Kalibrierplatte zwischen der bewegten Folie und der Kühlplatte im Bereich des ersten Kontaktes zwischen Platte und Folie zugeführt. Dieser minimiert die Reibung zwischen Folie und Platte und erzeugt zudem eine zusätzliche Erhöhung des Wärmeüberganges zwischen Platte und Folie.

Ferner kann durch diesen Kanal 3 der von der Folie aus dem Kühltank mitgeführte Schleppvolumenstrom kontinuierlich über den in der Kalibrierplatte vorgesehenen eigenen Kanal 3 ersetzt werden

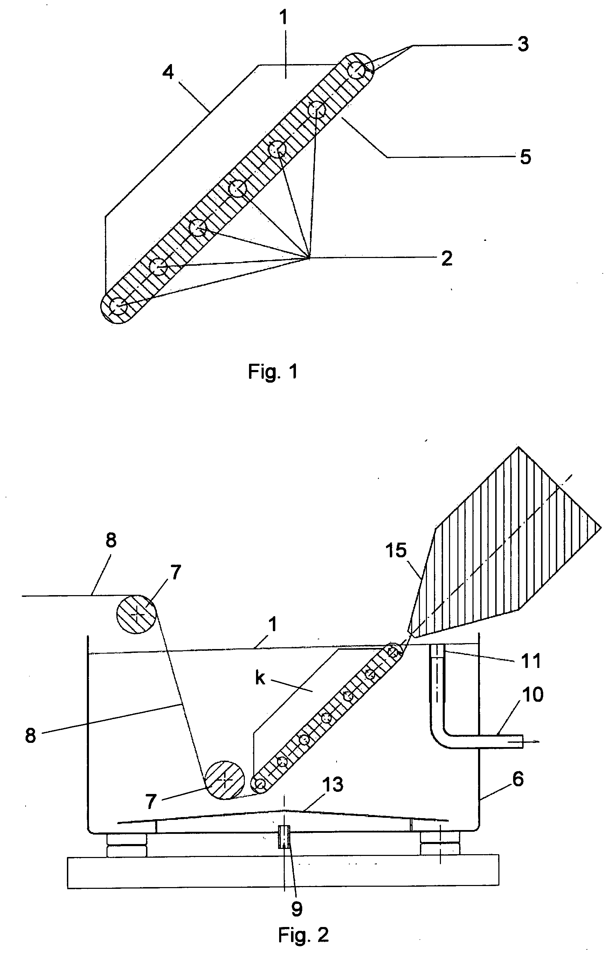

Das in Figur 2 dargestellte Verfahren eignet sich besonders für die Herstellung dünner Folien mit einer Dicke von < 600 µm.

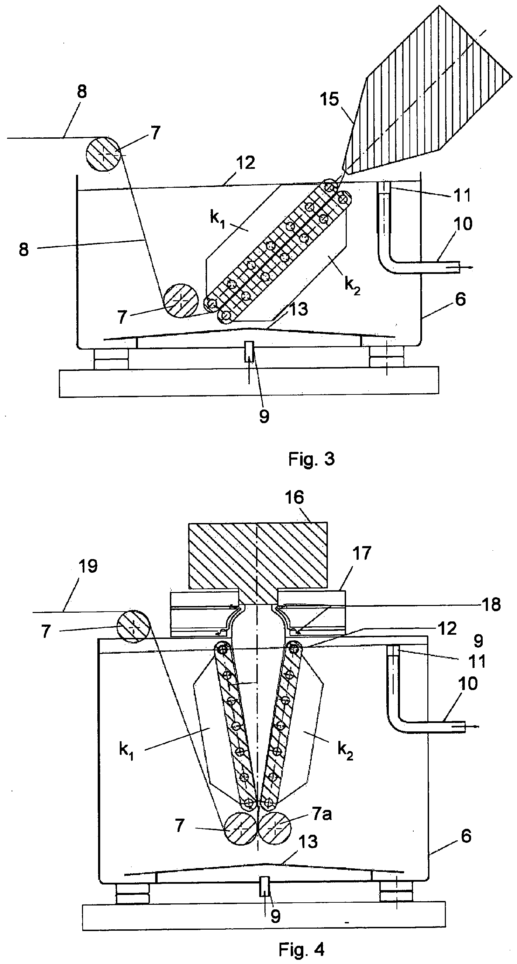

In Figur 3 ist ein Verfahren dargestellt, das sich insbesondere für die Herstellung dickerer Folien oder Platten eignet.

Hier wird das Extrudat zwischen zwei Kalibrierplatten K1 und K2 eingebracht und somit von beiden Seiten rasch abgekühlt.

Diese Ausführungsform hat den Vorteil, dass die Wärmeabfuhr der Folie bzw. bei größerer Dicke, der Platte, homogen über die gesamte Dicke der Folie erfolgen kann. Der Abstand der beiden Kalbrierplatten voneinander wird dabei von der Dicke der Folie bzw. Platte bestimmt und ist einstellbar.

Diese Ausführungsform des Verfahrens bzw. der Vorrichtung ist auch besonders geeignet für geschäumte Produkte, die speziell, beispielsweise geschlossene Oberflächen, aufweisen sollen. Gegebenenfalls können durch diese Ausführungsform aber auch dünnere Folien erzeugt werden.

In Figur 4 ist eine Ausführungsform dargestellt, die für die rasche Abkühlung von Blasfolien geeignet ist.

Dabei sind die Kalibrierplatten K1 und K2 im Wesentlichen V-förmig im Kühltank situiert, wobei der Winkel zwischen den Platten einstellbar ist.

Der an der Blasdüse 16 situierte Luftkühlring 17 ist so gestaltet, dass die aus der Blasdüse 16 eingeführte Luft über eine Absaugvorrichtung 18 völlig abgesaugt wird, sodass keine Luft auf die Wasseroberfläche treffen kann. Dadurch wird wiederum eine ruhige Wasseroberfläche gewährleistet.

Die Blasfolie 19 legt sich dann an die Kalibrierplatten K1 und K2 an und wird gleichzeitig rasch abgekühlt und flachgelegt.

Mit dieser Ausführungsform können innerhalb der Maschinenbreite beliebige Flachlegebreiten verarbeitet werden. Dadurch entfallen die bei den Quenching-Verfahren des Standes der Technik notwendigen Kalibrierringe und die aufwändigen Umrüstarbeiten bei der Verarbeitung unterschiedlicher Breiten der Blasfolien.

Durch die erfindungsgemäße Kalibrierplatte und das erfindungsgemäße Verfahren sind durch den verbesserten Wärmeaustausch die erforderlichen Kühlstrecken erheblich kürzer als bei den bekannten Quenching-Verfahren.

Durch das schnelle Abkühlen des Extrudates werden die Folieneigenschaften, insbesondere die Transparenz der Folien durch die Unterdrückung der Bildung kristalliner Anteile erheblich verbessert.

Zudem ist es möglich neue Folieneigenschaften, beispielsweise geschlossene Oberflächen bei geschäumten Folien zu erzeugen.

Durch den geringen Abstand von Düsenaustritt und Kontaktbereich der Kalibrierplatte ergibt sich auch ein sehr geringer Neck In. Neck In bezeichnet die Verringerung der Breite einer Folie nach dem Düsenaustritt. Dieser wird umso geringer je näher am Düsenaustritt die Folie durch Kühlung fixiert wird.

Die erfindungsgemäße Vorrichtung und das erfindungsgemäße Verfahren sind insbesondere für die rasche Abkühlung von Flachfolien oder Blasfolien aus teilkristallinen Polymerwerkstoffen, insbesondere thermoplastischen Polymeren, wie Polypropylen, Polyethylen und deren Copolymeren geeignet. Es eignet sich aber auch für alle extrudierten polymeren Werkstoffe, entweder um bestimmte Folieneigenschaften zu erzielen oder mit kürzeren Kühstrecken wirtschaftlicher zu produzieren.

## Patentansprüche

1. Vorrichtung zum raschen Abkühlen von Extrudaten teilkristalliner Polymerwerkstoffe umfassend einen mit einer Kühlflüssigkeit gefüllten Kühltank (6), wobei im Kühltank mindestens eine Kalibrierplatte (k, k₁, k₂) schwenkbar angeordnet und mindestens eine Umlenkvorrichtung (7) zum Transport des abgekühlten Extrudates (8) situiert sind, wobei die Kalibrierplatte aus einer beschichteten (5) Kühlplatte, in die Kühlkanäle (2) und ein Kanal (3) für den Schleppvolumenstrom eingebracht sind, besteht.

2. Vorrichtung nach Anspruch 1, **dadurch gekennzeichnet, dass** als Kühlflüssigkeit Wasser, Öle, polare oder unpolare Lösungsmittel, Emulsionen oder Dispersionen eingesetzt werden.

3. Vorrichtung nach einem der Ansprüche 1 oder 2, **dadurch gekennzeichnet, dass** die Kühlflüssigkeit Additive zur Beeinflussung der Oberflächeneigenschaften, wie Haftung, Bedruckbarkeit, Lackierbarkeit, Benetzung, Farbe der Folie enthält.

4. Vorrichtung nach Anspruch 3, **dadurch gekennzeichnet, dass** die Kühlplatte (1) aus einem metallischen Werkstoff wie Stahl, Messing, Kupfer oder Bronzen und anderen wärmeleitfähigen Legierungen oder Keramiken besteht.

5. Vorrichtung nach einem der Ansprüche 3 oder 4, **dadurch gekennzeichnet, dass** die Kühlplatte (1) eine Beschichtung (5) aus Kunststoff, PVD-, CVD-, DLC-Beschichtungen, flammgespritzten Oberflächen, galvanisch aufgebrachten Schichten, wie Chrom, Nickel aufweist, wobei die Oberfläche gegebenenfalls aufgeraut ist oder strukturbildende Chrom- oder Keramikschichten aufweist.

6. Vorrichtung nach einem der Ansprüche 3 oder 4, **dadurch gekennzeichnet, dass** die Kühlplatte (1) eine poröse Schicht aus gesinterten Materialien, Stahl, Kupfer, Legierungen, Keramiken aufweist, die ggf. Strukturen, die durch Ätzverfahren, Lasern, Elektronenstrahlen oder mechanische Perforation erzeugt sind, aufweist.

7. Vorrichtung nach einem der Ansprüche 1 bis 6, **dadurch gekennzeichnet, dass** die Kühlplatte (1) auf der Oberfläche, die Kontakt zur extrudierten Folie hat, gegenüberliegenden Oberfläche Kühlrippen (4) aufweist.

8. Vorrichtung nach einem der Ansprüche 1 bis 7, **dadurch gekennzeichnet, dass** die Kalibrierplatte (k, k₁, k₂) in einem Winkel von 0 - 90° schwenkbar im Kühltank (6) angeordnet ist.

9. Verfahren zum raschen Abkühlen von Flachfolien (8) oder Blasfolien (19) nach deren Extrusion, **gekennzeichnet durch** folgende Verfahrensschritte:
- Extrudieren des Extrudates in einen mit einer Kühlflüssigkeit gefüllten Kühltank (6),
- Führen des Extrudates über mindestens eine im Kühltank schwenkbar angeordnete Kalibrierplatte (k, k₁, k₂), die aus einer beschichteten Kühlplatte (1), in die Kühlkanäle (2) und ein Kanal (3) für den Schleppvolumenstrom eingebracht sind, besteht,
- Zuführung der Kühlflüssigkeit im Umfang des Schleppvolumenstroms über einen Kanal (3) der Kalibrierplatte(k, k₁, k₂),
- Entnehmen der abgekühlten Folie (8) über Umlenkvorrichtungen (7) aus dem Tank (6),
- Trocknen der Folie.

10. Verfahren nach Anspruch 9, **dadurch gekennzeichnet, dass** als Kühlflüssigkeit Wasser, Öle, polare oder unpolare Lösungsmittel, Emulsionen oder Dispersionen eingesetzt werden.

11. Verfahren nach einem der Ansprüche 9 oder 10, **dadurch gekennzeichnet, dass** die Kühlflüssigkeit Additive zur Beeinflussung der Oberflächeneigenschaften, wie Haftung, Bedruckbarkeit, Lackierbarkeit, Benetzung, Farbe der Folie enthält.

12. Verfahren nach einem der Ansprüche 9 bis 11, **dadurch gekennzeichnet, dass** die Kalibrierplatte (k, k₁, k₂) in einem Winkel von 0 - 90° schwenkbar im Kühltank angeordnet ist.

## Claims

1. A device for rapidly cooling extrudates of partially crystalline polymeric materials comprising a cooling tank (6) filled with a cooling liquid, wherein at least one pivotably arranged calibration plate (k, k₁, k₂) and at least one deflection device (7) for transporting the cooled extrudate (8) are situated in the cooling tank, wherein the calibration plate consists of a coated (5) cooling plate, into which cooling channels (2) and a channel (3) for the drag volume flow are inserted.

2. The device according to claim 1, **characterized in that** water, oils, polar or non-polar solvents, emulsions or dispersions are used as cooling liquid.

3. The device according to one of claims 1 or 2, **characterized in that** the cooling liquid contains additives for influencing the surface properties, such as adhesion, printability, lacquerability, wetting, color, of the film.

4. The device according to claim 3, **characterized in that** the cooling plate (1) consists of a metallic material such as steel, brass, copper or bronzes and other thermally conductive alloys or ceramics.

5. The device according to one of claims 3 or 4, **characterized in that** the cooling plate (1) comprises a coating (5) of plastic material, PVD, CVD, DLC coatings, flame-sprayed surfaces, galvanically applied layers, such as chromium, nickel, wherein the surface is optionally roughened or comprises structure-forming chromium or ceramic layers.

6. The device according to one of claims 3 or 4, **characterized in that** the cooling plate (1) comprises a porous layer of sintered materials, steel, copper, alloys, ceramics, which optionally comprises structures generated by means of etching techniques, lasering, electron rays or mechanical perforation.

7. The device according to one of claims 1 to 6, **characterized in that** the cooling plate (1) comprises cooling fins (4) on the surface opposite to the surface contacting the extruded film.

8. The device according to one of claims 1 to 7, **characterized in that** the calibration plate (k, k₁, k₂) is arranged in the cooling tank (6) pivotable at an angle of 0-90°.

9. A method for rapidly cooling flat films (8) or blown films (19) after their extrusion, **characterized by** the following method steps:
- extruding the extrudate into a cooling tank (6) filled with a cooling liquid,
- guiding the extrudate across at least one calibration plate (k, k₁, k₂) pivotably arranged in the cooling tank, said calibration plate (k, k₁, k₂) consisting of a coated cooling plate (1), into which cooling channels (2) and a channel (3) for the drag volume flow are inserted,
- feeding the cooling liquid to the extent of the drag volume flow via a channel (3) of the calibration plate (k, k₁, k₂),
- removing the cooled film (8) from the tank (6) via deflection devices (7),
- drying the film.

10. The method according to claim 9, **characterized in that** water, oils, polar or non-polar solvents, emulsions or dispersions are used as cooling liquid.

11. The method according to one of claims 9 or 10, **characterized in that** the cooling liquid contains additives for influencing the surface properties, such as adhesion, printability, lacquerability, wetting, color, of the film.

12. The method according to one of claims 9 to 11, **characterized in that** the calibration plate (k, k₁, k₂) is arranged in the cooling tank pivotable at an angle of 0-90°.

## Revendications

1. Dispositif pour le refroidissement rapide d'extrudats de matériaux polymères partiellement cristallins comprenant un réservoir de refroidissement (6) rempli d'un liquide de refroidissement, moyennant quoi, dans le réservoir de refroidissement, est disposée au moins une plaque de calibrage (k, k₁, k₂) de manière pivotante et au moins un dispositif de renvoi (7) pour le transport de l'extrudat (8) refroidi, la plaque de calibrage étant constituée d'une plaque de refroidissement revêtue (5), dans laquelle sont réalisés des canaux de refroidissement (2) et un canal (3) pour le flux volumique d'entraînement.

2. Dispositif selon la revendication 1, **caractérisé en ce que**, en tant que liquide de refroidissement sont utilisés de l'eau, des huiles, des solvants polaires ou non polaires, des émulsions ou des dispersions.

3. Dispositif selon l'une des revendications 1 ou 2, **caractérisé en ce que** le liquide de refroidissement contient des additifs permettant d'influer sur les propriétés de surface comme d'adhérence, la possibilité d'impression, la possibilité de peinture, l'humidification, la couleur du film.

4. Dispositif selon la revendication 3, **caractérisé en ce que** la plaque de refroidissement (1) est constituée d'un matériau métallique comme l'acier, de laiton, le cuivre ou des bronzes et d'autres alliages ou céramiques thermiquement conducteurs.

5. Dispositif selon l'une des revendications 3 ou 4, **caractérisé en ce que** la plaque de refroidissement (1) comprend un revêtement (5) en matière plastique, des revêtements PVD, CVD, DLC, des surfaces projetées à la flamme, des couches appliquées par galvanisation, comme le chrome, le nickel, la surface étant le cas échéant rendue rugueuse, ou qui présente des couches de chrome ou de céramique constituant la structure.

6. Dispositif selon l'une des revendications 3 ou 4, **caractérisé en ce que** la plaque de refroidissement (1) comprend une couche poreuse en matériaux frittés, en acier, cuivre, alliages, céramiques, qui présente, le cas échéant, des structures produites par gravure, laser, faisceaux d'électrons ou perforation mécanique.

7. Dispositif selon l'une des revendications 1 à 6, **caractérisé en ce que** la plaque de refroidissement (1) comprend, sur la surface qui est opposée de la surface qui est en contact avec le film extrudé, des nervures de refroidissement (4).

8. Dispositif selon l'une des revendications 1 à 7, **caractérisé en ce que** la plaque de calibrage (k, k₁, k₂) est disposée de manière pivotante à un angle de 0° à 90° dans le réservoir de refroidissement (6).

9. Procédé de refroidissement rapide de films plats (8) ou de films soufflés (19) après leur extrusion, **caractérisé par** les étapes suivantes :
- extrusion de l'extrudat dans un réservoir de refroidissement (6) rempli d'un liquide de refroidissement,
- guidage de l'extrudat, par l'intermédiaire d'au moins une plaque de calibrage (k, k₁, k₂), disposée de manière pivotante dans le réservoir de refroidissement, qui est constituée d'une plaque de refroidissement revêtue (1), dans laquelle sont réalisés des canaux de refroidissement (2) et un canal (3) pour le flux volumique d'entraînement,
- introduction du liquide de refroidissement à l'importance du flux volumique d'entraînement par l'intermédiaire d'un canal (3) de la plaque de calibrage (k, k₁, k₂)
- retrait du film refroidi (8) par l'intermédiaire de dispositifs de renvoi (7) hors du réservoir (6),
- séchage du film.

10. Procédé selon la revendication 9, **caractérisé en ce que**, en tant que liquide de refroidissement sont utilisés de l'eau, des huiles, des solvants polaires ou non polaires, des émulsions ou des dispersions.

11. Procédé selon l'une des revendications 9 ou 10, **caractérisé en ce que** le liquide de refroidissement contient des additifs permettant d'influer sur les propriétés de surface comme l'adhérence, la possibilité d'impression, la possibilité de peinture, l'humidification, la couleur du film.

12. Procédé selon l'une des revendications 9 à 11, **caractérisé en ce que** la plaque de calibrage (k, k₁, k₂) est disposée de manière pivotante à un angle de 0° à 90° dans le réservoir de refroidissement.
